# EUROPÄISCHE PATENTSCHRIFT

(11) **EP 3 083 327 B1**
(45) Veröffentlichungstag und Bekanntmachung des Hinweises auf die Patenterteilung: **17.10.2018**
(21) Anmeldenummer: 14811929.0
(22) Anmeldetag: 15.12.2014
(51) Int. Cl.: B60N 2/70, B60N 2/427, B29L 31/58, B29K 75/00, B29C 44/04, B29C 44/06, B29K 105/04, B60N 2/56, B29L 31/00

(54) **SCHAUMTEIL, INSBESONDERE FÜR EINEN FAHRZEUGSITZ UND FAHRZEUGSITZ**
FOAM PART, IN PARTICULAR FOR A VEHICLE SEAT, AND VEHICLE SEAT
PIÈCE EN MOUSSE, EN PARTICULIER POUR UN SIÈGE DE VÉHICULE ET SIÈGE DE VÉHICULE

(30) Priorität: 20.12.2013 DE 102013226865; 20.12.2013 DE 102013226862; 23.05.2014 DE 102014209845
(43) Veröffentlichungstag der Anmeldung: 26.10.2016
(73) Patentinhaber: Adient Luxembourg Holding S.à r.l., 1855 Luxembourg (LU)
(72) Erfinder: HUGUES, Laurent, F-67120 Soultz les Bain (FR)
(74) Vertreter: Liedhegener, Ralf
(86) Internationale Anmeldenummer: PCT/EP2014/077742
(87) Internationale Veröffentlichungsnummer: WO 2015/091348

(56) Entgegenhaltungen:
- WO-A1-2007/128113
- WO-A1-2014/106592
- DE-U- 1 908 883
- DE-U1- 29 809 933
- GB-A- 2 441 417
- US-A- 2 588 823
- US-A- 5 816 661
- US-A1- 2010 314 929

## Beschreibung

Die Erfindung betrifft ein Schaumteil, insbesondere für einen Fahrzeugsitz, mit mehreren einem Benutzer zugewandten Komfortröhren, wobei mehrere der Komfortröhren jeweils ein Loch oder mehrere Löcher aufweisen. Die Erfindung betrifft zudem einen Fahrzeugsitz aufweisend ein solches Schaumteil.

### Stand der Technik

Durch Benutzung sind Schaumteile für Fahrzeugsitze bekannt, die einem Polstern der Sitzstruktur dienen und dem Benutzer des Fahrzeugsitzes einen möglichst guten Sitzkomfort bieten sollen. Meist umfasst die Sitzpolsterung ein Schaumteil für das Sitzkissen und ein davon separates Schaumteil für die Sitzlehne. Jedes der beiden Schaumteile weist einen Mittelbereich und zwei Seitenwangen auf. Bei einem Schaumteil für das Sitzkissen stützt der Mittelbereich des Schaumteils das Gesäß und die Oberschenkelrückseiten des Insassen des Fahrzeugsitzes nach unten ab, während die beiden Seitenwangen seitlich an jeweils einem Oberschenkel anliegen und dadurch Querkräfte auf den Insassen, insbesondere während einer Kurvenfahrt, aufnehmen können. Bei einem Schaumteil für die Lehne stützt der Mittelbereich des Schaumteils den Rücken des Insassen nach hinten ab, während die beiden Seitenwangen seitlich an dem Rücken anliegen und dadurch Querkräfte auf den Insassen aufnehmen können.

Aus DE 202 02 042 U1 ist ein Schaumteil, insbesondere für einen Fahrzeugsitz, mit einer einem Benutzer zugewandten ersten Schaumlage und einer dem Benutzer abgewandten zweiten Schaumlage bekannt, wobei die erste Schaumlage eine gegenüber der zweiten Schaumlage unterschiedliche Härte und/oder Dichte aufweist. Das Schaumteil weist in der mittleren Sitzfläche mehrere Löcher auf.

Die DE 20 2007 002 196 U1 offenbart ein Schaumteil, insbesondere für einen Fahrzeugsitz, mit einer einem Benutzer zugewandten ersten Schaumlage und einer dem Benutzer abgewandten zweiten Schaumlage und einer zwischen den Schaumlagen angeordneten Zwischenlage. Zur Verbesserung der Feuchtigkeits-Transporteigenschaften weist das Schaumteil ein System von Löchern auf.

Die EP 1 068 094 B1 offenbart ein Schaumteil mit mehreren an einem Grundkörper des Schaumteils angeformten, einander benachbarten, und sich im Wesentlichen senkrecht zur Sitzfläche von dem Grundkörper weg nach oben erstreckenden, als Röhrenabschnitte bezeichnete Komfortröhren zur Komfortsteigerung. Während des Einsitzens des Insassen werden zunächst die Komfortröhren komprimiert, während der Grundkörper nur unwesentlich verformt wird. Erst nach deutlicher Verformung der Komfortröhren wird der Grundkörper stärker komprimiert. Dadurch wird ein zweistufiges Einsitzverhalten mit steigender Polsterhärte erreicht. Die Komfortröhren weisen vollständig durch das Schaumteil hindurch verlaufende Löcher auf.

Aus der US 5,816,661 A ist ein Schaumteil mit einer Vielzahl von Sacklöchern bekannt, die sich von einer weitgehend ebenen Schaumteiloberfläche in weitgehend senkrechter Richtung zur Schaumteiloberfläche in das Schaumteil hinein erstrecken.

Die GB 2 441 417 A offenbart ein Schaumteil für einen Fahrzeugsitz, mit einer einem Insassen zugewandten Schaumteiloberfläche, wobei die Schaumteiloberfläche mehrere Löcher aufweist, die als Sackloch ausgebildet sind, wobei die Sacklöcher von einer dem Insassen zugewandten Oberfläche des Schaumteils ausgehen.

Aus der US 2010/0314929 A1 ist ein Schaumteil bekannt, bestehend aus einer oben angeordneten ersten Schauteilschicht und einer unterhalb der ersten Schaumteilschicht angeordneten zweiten Schaumteilschicht. Die erste Schaumteilschicht weist eine einem Insassen zugewandte Schaumteiloberfläche auf. Die dem Insassen zugewandte Schaumteiloberfläche weist mehrere durchgehende Ventilationslöcher auf.

Die WO 2007/128113 A1 offenbart eine geschäumte Matratze. Die Matratze ist eben ausgebildet und daher nicht für einen Fahrzeugsitz geeignet. Die Matratze weist einen Schaumunterbau auf, der mit einer Körperkontaktmatte verbunden ist. Die Körperkontaktmatte ist einem auf der Matratze aufliegenden menschlichen Körper zugewandt. Der Schaumunterbau weist mehrere Komfortröhren auf, die jeweils ein Loch aufweisen. Die Löcher verbinden eine Oberfläche der Körperkontaktmatte mit jeweils einer inneren Kavität.

Aus der DE 19 08 883 U ist ein Polsterträger in Form einer geschäumten Matratze oder eines geschäumten Kissens bekannt. Der Polsterträger ist weitgehend eben ausgebildet und nicht für einen Fahrzeugsitz geeignet. Der Polsterträger weist mehrere Sacklöcher auf, die einem auf der Matratze aufliegenden menschlichen Körper abgewandt sind. Die Sacklöcher gehen von einer dem menschlichen Körper abgewandten Unterseite des Polsterträgers aus.

Aus dem Stand der Technik sind Zweizonenschäume bekannt, bei denen durch Verwendung unterschiedlicher Schaumwerkstoffe der Mittelbereich weicher ausgebildet ist als die Seitenwangen. Dadurch soll zum einen der Sitzkomfort erhöht und zum anderen die Seitenabstützung für den Benutzer verbessert werden. Dazu werden oftmals Schnittschaumauflagen im Mittelbereich und Hartschaumeinleger in den Seitenwangen verwendet. Zur Vermeidung eines Durchtauchens des Benutzers unter dem Beckengurt im Crashfall wird häufig eine Anti-Submarining-Funktion durch ein zusätzliches Bauteil aus einem Partikelschaumwerkstoff, beispielsweise EPP (Expandiertes Polypropylen), bereitgestellt. Die genannten zusätzlichen Bauteile erhöhen die Kosten und reduzieren die Dauerhaltbarkeit der Schaumteile. Zudem sind nur begrenzt dünne Schaumdicken möglich.

Aus der WO 01/74557 A1 ist ein Schaumteil bekannt, mit einem ersten Bereich aus Schaum einer ersten Zusammensetzung und einem zweiten Bereich aus Schaum einer zweiten Zusammensetzung, wobei zwischen dem ersten und dem zweiten Bereich ein Netzwerk aus Polyethylen, Jute, Gaze Vlies oder dergleichen angeordnet ist. Dieses Schaumteil erfüllt jedoch nicht höchste Komfortansprüche während des Einsitzens, insbesondere dann nicht, wenn während des Einsitzens zunächst eine sehr weiche Polsterschicht erwünscht ist. Ein vergleichbarer Polsteraufbau ist auch aus der WO 2010/102785 A2 bekannt.

Eine Kombination aus Röhrenabschnitten, wie diese aus der EP 1 068 094 B1 bekannt sind, und einer horizontalen Trennebene zwischen einem ersten Bereich des Schaumteils mit einer ersten Zusammensetzung und einem zweiten Bereich des Schaumteils mit einer zweiten Zusammensetzung, wie aus der WO 01/74557 A1 bekannt, galt bisher als nicht herstellbar.

### Aufgabe

Der Erfindung liegt die Aufgabe zu Grunde, ein Schaumteil der eingangs genannten Art zu verbessern. Insbesondere soll der Sitzkomfort des Insassen erhöht werden. Insbesondere soll die Nachgiebigkeit der Polsteroberfläche gezielt anpassbar sein, beispielsweise soll ein Einfluss einer unterhalb des Schaumteils angeordneten Sitzstruktur auf die Nachgiebigkeit des Schaumteils kompensiert werden können und eine gezielte Luftverteilung für eine Sitzklimatisierung ermöglicht werden. Zudem soll ein Fahrzeugsitz mit einem solchen Schaumteil zur Verfügung gestellt werden.

### Lösung

Diese Aufgabe wird erfindungsgemäß durch ein Schaumteil mit den Merkmalen des Anspruches 1 gelöst.

Dadurch, dass mindestens eines der Löcher in den Komfortröhren als Sackloch ausgebildet ist, kann bei der Auslegung des Schaumteils eine Optimierung des Sitzkomforts im Hinblick auf die Schaumteilhärte und die Sitzbelüftung erreicht werden.

Bei der Auslegung von Schaumteilen stellen eine Optimierung des Sitzkomforts im Hinblick auf die Schaumteilhärte und eine Optimierung der Sitzbelüftung oftmals sich widersprechende Ziele dar. Dieser Zielkonflikt lässt sich vermeiden, indem einzelne Löcher der Komfortröhren als Sacklöcher ausgebildet sind, das heißt nicht vollständig durch das Schaumteil hindurch verlaufen. Die Sacklöcher bieten zwar keine Luftzirkulation durch das Schaumteil hindurch, jedoch weist eine Komfortröhre mit Sackloch im Vergleich zu einer Komfortröhre mit Durchgangsloch eine geringere Nachgiebigkeit auf.

Unter dem Begriff Komfortröhre ist ein erhöhter, dem Insassen zugewandter Schaumteilbereich zu verstehen, der unterschiedlichste Geometrie haben kann. Die Komfortröhren bilden in dem Insassen zugewandten Polsterbereichen weitgehend freistehende, insbesondere vollständig freistehende Erhöhungen gegenüber einem Grundkörper des Schaumteils. Die Komfortröhren sind vollständig oder weitgehend von einer Vertiefung umgeben. Die Vertiefung kann etwa 5 mm bis 50 mm tief, vorzugsweise 10 mm bis 25 mm tief und höchst vorzugsweise 15 mm bis 20 mm tief sein. Die Tiefe der Vertiefung entspricht der Höhe der benachbarten Komfortröhre.

Die Komfortröhren können innen hohl ausgebildet sein, beispielsweise zu Zwecken der Sitzklimatisierung, oder aus Vollmaterial bestehen. Im Falle von innen hohl ausgebildeten Komfortröhren können Durchgangslöcher oder Sacklöcher durch die Komfortröhren und einen die Komfortröhren tragenden Grundkörper des Schaumteils verlaufen. Dabei kann eine Komfortröhre kein, ein oder mehrere, insbesondere zwei, zueinander versetzte, insbesondere parallel verlaufende Löcher aufweisen.

Die nicht als Sackloch ausgebildeten Durchgangslöcher verlaufen vollständig durch das Schaumteil hindurch, so dass Luft von der Unterseite des Schaumteils durch die Löcher zur Oberseite des Schaumteils strömen kann und umgekehrt.

Vorzugsweise sind die Löcher (Durchgangslöcher und Sacklöcher) zylinderförmig, insbesondere kreiszylinderförmig ausgebildet. Dadurch lassen sich die Löcher mit einfachen Mitteln herstellen. Es sind jedoch erfindungsgemäß auch beliebige andere Querschnitte der Löcher möglich.

Die Nachgiebigkeit einer einzelnen Komfortröhre lässt sich auch durch das Vorsehen mehrerer Löcher und / oder eine Kombination von Sacklöchern und Durchgangslöchern gezielt beeinflussen. Vorzugsweise sind Komfortröhren mit mehreren Löchern im Bereich der Sitzmitte, in Fahrzeugquerrichtung betrachtet, angeordnet.

Die Außenkonturen der Querschnitte der Komfortröhren können grundsätzlich alle bekannten Querschnitte von festen Körpern aufweisen und insbesondere rund, polygon, wabenförmig oder wie in der EP 1 068 094 B1 beschrieben, ausgeführt sein. Die Außenkonturen der Komfortröhren sind unabhängig von den Querschnitten der Löcher, so dass beispielsweise eine quadratische Komfortröhre ein ovales Loch aufweisen kann.

Mindestens eine Komfortröhre kann genau ein Sackloch aufweisen. Vorzugsweise weisen mehrere Komfortröhren kann genau ein Sackloch auf. Eine Komfortröhre kann auch mehrere Sacklöcher aufweisen. Dies ist dann sinnvoll, wenn die Abmessung der Komfortröhre in mindestens einer senkrecht zum Sackloch verlaufenden Richtung um ein vielfaches größer ist, als der Durchmesser des Sacklochs. Mindestens eine Komfortröhre kann ein Sackloch und ein Durchgangsloch aufweisen. Dies ist dann sinnvoll, wenn ein unsymmetrisches Nachgiebigkeitsverhalten einer Komfortröhre angestrebt ist.

Ein Sackloch geht erfindungsgemäß von einer einem Insassen zugewandten Oberfläche des Schaumteils aus. Ein Sackloch kann jedoch auch von einer einem Insassen abgewandten Oberfläche des Schaumteils ausgehen. Ein Sackloch verläuft vorzugsweise annähernd in senkrechter Richtung zu der Oberfläche des Schaumteils. Ein Sackloch verläuft vorzugsweise parallel zu einer Schließrichtung eines ein Unterteil und ein Oberteil aufweisenden Werkzeugs zur Herstellung des Schaumteils. Das Unterteil und das Oberteil bilden eine Kavität des Werkzeugs, in der das Schauteil geschäumt wird. Durch parallel zur Schließrichtung verlaufende Sacklöcher lässt sich das Schaumteil leichter aus einem Werkzeug entnehmen. Die Schließrichtung ist die Richtung, in der sich beim Öffnen und Schließen des Werkzeugs das Oberteil relativ zu dem Unterteil bewegt. Aufgrund einer dreidimensionalen Oberfläche des Schaumteils kann ein Sackloch abweichend von einer genau senkrechten Richtung zur Oberfläche des Schaumteils verlaufen, was durch das Merkmal annähernd senkrecht beschrieben ist. Unter dem Merkmal annähernd senkrecht ist zu verstehen, dass der Verlauf des Sacklochs parallel zur Schließrichtung des Werkzeugs und/oder senkrecht zu einer Oberfläche des Schaumteils und/oder senkrecht zu einer Teiloberfläche des Schaumteils und/oder senkrecht zu einer Oberfläche der Komfortröhre verläuft. Annähernd senkrecht schließt Winkelabweichungen bis zu 15° von einer der genannten Senkrechten oder der Schließrichtung ein. Eine Teiloberfläche des Schaumteils kann dabei beispielsweise die Oberfläche eines Mittelbereichs einer Sitzfläche sein. Ein Sackloch kann in senkrechter oder in annähernd senkrechter Richtung zu der dem Insassen hin orientierten Oberfläche einer Komfortröhre verlaufen. Ein Sackloch kann in senkrechter oder in annähernd senkrechter Richtung zu einer Ausgleichsebene einer zu dem Insassen hin orientierten Oberfläche einer Komfortröhre oder eines Teilbereichs der verlaufen.

Die Tiefe eines Sacklochs kann der Höhe der zugeordneten Komfortröhre entsprechen. Die Tiefe des Sacklochs kann jedoch auch geringer sein als die Höhe der zugeordneten Komfortröhre oder größer sein als die Höhe der zugeordneten Komfortröhre. Unter zugeordneter Komfortröhre ist die Komfortröhre zu verstehen, in der das Sackloch zumindest abschnittsweise verläuft. Ein Sackloch kann etwa 5 mm bis 100 mm tief, vorzugsweise 20 mm bis 80 mm tief und höchst vorzugsweise 40 mm bis 60 mm tief sein. Mehrere Sacklöcher eines Schaumteils können zueinander unterschiedliche Tiefen aufweisen.

Eine weitere Komfortsteigerung lässt sich erreichen, indem das Sacklöcher aufweisende Schaumteil aus einer ersten Schaumlage und einer zweiten Schaumlage besteht.

Eine genaue Trennung der Schaumteilbereiche zwischen der ersten Schaumlage und der zweiten Schaumlage lässt sich durch ein flächiges Netzwerk zwischen den Schaumlagen erreichen, insbesondere ein Netzwerk aus Polyethylen, Jute, Gaze oder Vlies. Idealerweise ist das Netzwerk während des Schäumverfahrens in geringem Umfang durchlässig für den Schaumwerkstoff, wodurch eine feste Verbindung zwischen den Schaumlagen und dem Netzwerk entsteht. Unter dem Begriff Netzwerk sind auch alle an sich bekannten textilen Stoffe, Gewebe, Gewirke und Vliese zu verstehen.

Das Netzwerk eines komfortabel ausgelegten Schaumteils liegt vorzugsweise zwischen der ersten Schaumlage und der zweiten Schaumlage in einer annähernd horizontalen, vorzugsweise genau horizontalen Ebene des Schaumteils. Der Begriff horizontal bedeutet dabei nicht die mathematisch exakt horizontale Lage innerhalb eines Fahrzeuges, sondern alle Ebenen, die annähernd parallel zu der dem Sitzinsassen zugewandten Oberfläche des jeweiligen Schaumteils sind. Sitzlehnenpolster können somit eine horizontale Ebene haben, die im Fahrzeug sogar annähernd vertikal ausgerichtet sein kann. Im Werkzeug liegt die horizontale Ebene jedoch zumeist annähernd horizontal. Die horizontale Ebene muss dabei nicht mathematisch eben, also zweidimensional sein, sondern kann auch eine leicht dreidimensionale Gestalt mit Wölbungen und leichten Erhöhungen und Vertiefungen aufweisen.

Wenn das Netzwerk in einem Bereich der untersten Punkte von Vertiefungen zwischen mindestens zwei Komfortröhren angeordnet ist, werden beim Einsitzen des Insassen zunächst im Wesentlichen die Komfortröhren komprimiert. Im weiteren Verlauf des Einsitzens wird auch die zweite Schaumlage deutlich komprimiert. Dadurch wird ein zweistufiges Einsitzverhalten mit steigender Polsterhärte erreicht.

Ein dreistufiges Einsitzverhalten mit steigender Polsterhärte wird erreicht, indem das Netzwerk in einem Bereich deutlich unterhalb der Vertiefungen zwischen den mindestens zwei Komfortröhren angeordnet ist. Die Trennebene zwischen den beiden Schaumlagen liegt im Vergleich zur zuvor beschriebenen Variante mit zweistufigem Einsitzverhalten tiefer, das heißt weiter vom Insassen entfernt. Während des Einsitzens des Insassen werden dadurch zunächst im Wesentlichen die Komfortröhren komprimiert. Im weiteren Verlauf des Einsitzens wird im Wesentlichen die unterhalb der Komfortröhren angeordnete Schicht der ersten Schaumlage komprimiert, zunächst ohne die zweite Schaumlage deutlich zu komprimieren. Letztlich wird dann auch die zweite Schaumlage deutlich komprimiert.

Ein dreistufiges Einsitzverhalten kann alternativ auch dadurch erreicht werden, dass das Netzwerk in einem Bereich oberhalb der untersten Punkte der Vertiefungen zwischen mindestens zwei Komfortröhren angeordnet ist.

Eine bevorzugte Bezugsbefestigung an ein erfindungsgemäßes Schaumteil sieht vor, dass zwischen einzelnen Feldern von Komfortröhren Polsterbefestigungskanäle vorgesehen sind, durch die hindurch der Bezug, vorzugsweise über Clipse, Drähte oder Haken, an Befestigungsmittel im Schaumteil befestigbar ist. Solche Befestigungsmittel können an sich bekannte eingeschäumte Metalldrähte sein.

Eine homogene Sitzdruckverteilung wird erreicht, wenn die Komfortröhren einzelner zueinander spiegelsymmetrisch angeordneter Felder zueinander spiegelbildlich angeordnet sind. Besonders bevorzugt ist dabei eine Spiegelebene, durch einen Polsterbefestigungskanal, der in Fahrtrichtung und in der Sitzmitte verläuft. Die Anordnung der Sacklöcher und Durchgangslöcher kann spiegelsymmetrisch sein, es können jedoch im Einzelfall auch unsymmetrische Anordnungen von Vorteil sein, beispielsweise wenn die zu polsternde Sitzkissenstruktur selbst unsymmetrisch aufgebaut ist.

Ein Schaumteil bietet einen besonders guten Seitenhalt für einen Sitzinsassen, indem das Schaumteil eine dritte Schaumlage aufweist, die eine gegenüber der Härte und/oder Dichte der beiden anderen Schaumlagen größere Härte und/oder Dichte aufweist, insbesondere im Bereich einer Seitenwange des Schaumteils.

Die Aufgabe wird auch durch einen Fahrzeugsitz mit einer Lehne und einem Sitzkissen, wobei die Lehne und / oder das Sitzkissen ein erfindungsgemäßes Schaumteil umfasst, gelöst. Ein Fahrzeugsitz mit einer Lehne und einem Sitzkissen lässt sich hinsichtlich des Sitzkomforts deutlich verbessern, indem die Lehne und / oder das Sitzkissen ein erfindungsgemäßes Schaumteil aufweist. Der Sitzkomfort eines Fahrzeugsitzes lässt sich erhöhen, indem eine in Fahrrichtung vorderste Reihe von Komfortröhren eines Schaumteils des Sitzkissens mindestens ein Sackloch aufweist. Vorzugsweise weisen sämtliche Komfortröhren einer vordersten Reihe von Komfortröhren eines Schaumteils des Sitzkissens genau ein Sackloch auf.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: eine Draufsicht auf ein als Sitzkissen-Schaumteil ausgeführtes erstes Ausführungsbeispiel,
- Fig. 2:: eine Seitenansicht des ersten Ausführungsbeispiels,
- Fig. 3:: einen Schnitt durch das erste Ausführungsbeispiel entlang der Linie A - A in Figur 1,
- Fig. 4:: einen Fig. 3 entsprechenden Schnitt durch eine erste Abwandlung des ersten Ausführungsbeispiels,
- Fig. 5:: einen Fig. 3 entsprechenden Schnitt durch eine zweite Abwandlung des ersten Ausführungsbeispiels,
- Fig. 6:: eine Vorderansicht eines als Sitzlehnen-Schaumteil ausgeführten zweiten Ausführungsbeispiels,

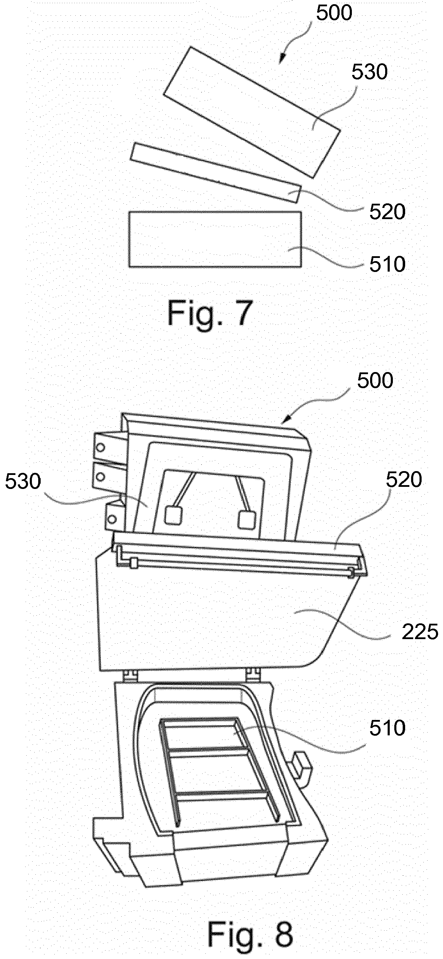

- Fig. 7:: eine Prinzipdarstellung eines erfindungsgemäßen Werkzeugs,
- Fig. 8:: eine schematische und perspektivische Darstellung des Werkzeugs aus Fig. 7,
- Fig. 9:: eine perspektivische Ansicht eines als Sitzkissen-Schaumteil ausgeführten dritten Ausführungsbeispiels,
- Fig. 10:: eine Draufsicht auf das dritte Ausführungsbeispiel,
- Fig. 11:: eine Draufsicht auf ein viertes Ausführungsbeispiel und
- Fig. 12:: einen Schnitt durch das vierte Ausführungsbeispiel entlang der Linie B - B in Figur 11.

Ein Fahrzeugsitz, insbesondere für ein Kraftfahrzeug, umfasst ein Sitzkissen und eine Lehne.

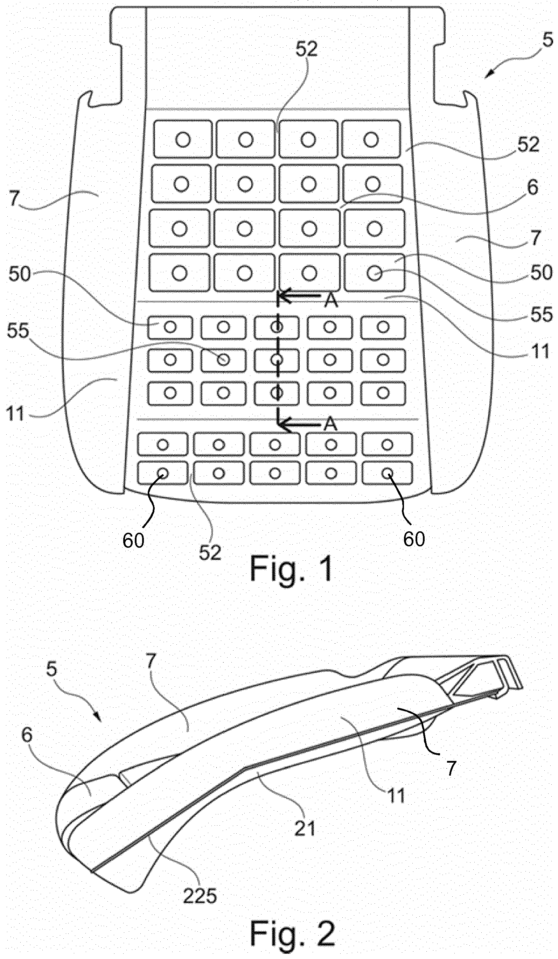

In den Figuren 1 und 2 ist als erstes Ausführungsbeispiel ein erfindungsgemäßes Schaumteil 5 für das Sitzkissen des Fahrzeugsitzes dargestellt. Das Schaumteil 5 umfasst einen Mittelbereich 6 und zwei Seitenwangen 7.

Eine in Einbaulage des Fahrzeugsitzes annähernd horizontal angeordnete erste Schaumlage 11 ist im Falle der Benutzung des Fahrzeugsitzes dem Benutzer zugewandt, so dass der Benutzer mit dem Gesäß und den Oberschenkelrückseiten, gegebenenfalls unter Zwischenlage weiterer Polsterbestandteile wie insbesondere eines Stoff- oder Lederbezuges, in Teilbereichen mit der ersten Schaumlage 11 in Kontakt ist. Die erste Schaumlage 11 besteht vorzugsweise aus Weichschaum.

In Einbaulage unterhalb der ersten Schaumlage 11 ist eine zweite Schaumlage 21 angeordnet, insbesondere ebenfalls annähernd horizontal ausgerichtet und einteilig mit der ersten Schaumlage 11 verbunden. Die zweite Schaumlage 21 besteht aus einem gegenüber dem Schaummaterial der ersten Schaumlage 11 festeren Schaummaterial, vorzugsweise aus Hartschaum.

In einer Abwandlung des ersten Ausführungsbeispiels bestehen die Seitenwangen 7 aus einem dritten Schaummaterial. Die zweite Schaumlage 21 besteht aus einem gegenüber dem Schaummaterial der ersten Schaumlage 11 härteren Schaummaterial. Das dritte Schaummaterial der Seitenwangen 7 ist nochmals härter als das Schaummaterial der zweiten Schaumlage 21.

Eine Trennebene zwischen der ersten Schaumlage 11 und der zweiten Schaumlage 21 verläuft vorliegend sowohl durch den Mittelbereich 6 als auch durch die beiden Seitenwangen 7. In Abwandlungen des Ausführungsbeispiels können die Seitenwangen 7 jedoch auch vollständig aus der zweiten Schaumlage 21 oder aus einem dritten Schaumwerkstoff bestehen. In diesem Fall weist dann nur der Mittelbereich 6 einen Zweizonenschaum auf.

Die beiden Schaumlagen 11, 21 sind in einem Werkzeug geschäumt und weisen zueinander unterschiedliche Härten und Dichten auf. Die beiden Schaumlagen 11 und 21 sind aus Polyurethan und insbesondere im MDI- (Diphenylmethandiisocyanat-) oder TDI- (Toluylendiisocyanat-) Schäumverfahren oder einem Mischverfahren hergestellt. Die Schaumhärten liegen vorzugsweise zwischen 4 und 20 kPa, wobei die erste Schaumlage 11 näher an dem unteren Wert und die zweite Schaumlage 21 näher an dem oberen Wert liegt. Die Dichte der Schaumlagen 11, 21 liegt vorzugsweise zwischen 50 g/l und 95 g/l.

Der Mittelbereich 6 der ersten Schaumlage 11 weist zudem mehrere, vorliegend einundvierzig Komfortröhren 50 auf, welche insbesondere mit einem rechteckförmigen Querschnitt ausgestaltet sind und den Komfort beim ersten Einsitzen und auf kurzen Fahrstrecken erhöhen. Die untere, härtere zweite Schaumlage 21 stärkt hingegen den Langzeitkomfort. Unter einer Komfortröhre 50 ist eine erhöhte Stelle der dem Sitzinsassen zugewandten Oberfläche des Schaumteils 5 zu verstehen, die von mindestens einer Vertiefung 52 umgeben ist. Die Vertiefung 52 ist etwa 5 mm bis 50 mm tief, vorzugsweise 10 mm bis 25 mm tief und höchst vorzugsweise 15 mm bis 20 mm tief. Eine Komfortröhre 50 ist somit ein zumindest teilweise freistehender Bereich der Oberfläche des Schaumteils 5. Eine Komfortröhre kann aus Vollmaterial bestehen oder im Inneren teilweise hohl ausgeführt sein.

Die Komfortröhren 50 sind einstückig mit der ersten Schaumlage 11 ausgebildet oder verbunden und bilden die dem Sitzinsassen am nächsten zugewandten Abschnitte des Mittelbereichs 6 des Schaumteils 5. Die Komfortröhren 50 sind im Wesentlichen senkrecht zur Sitzfläche angeordnet. Die Querschnitte der Komfortröhren 50 sind vorliegend rechteckig mit abgerundeten Kanten, können jedoch auch jede andere geometrische Form aufweisen. Zwischen benachbarten Komfortröhren 50 liegen die Vertiefungen 52, deren Tiefe der Höhe der jeweiligen Komfortröhren 50 über einer Grundfläche der ersten Schaumlage 11 entspricht.

Für einen guten Klimakomfort ist in einigen der Komfortröhren 50 jeweils ein Durchgangsloch 55 vorgesehen. Die Durchgangslöcher 55 sind vorliegend kreiszylinderförmig ausgebildet und liegen vorzugsweise zentrisch in der zugehörigen Komfortröhre 50. Von einer kreiszylindrischen Form abweichende Querschnitte der Durchgangslöcher 55, beispielsweise Polygonquerschnitte oder elliptische Querschnitte, sind ebenfalls möglich. Jedes der Durchgangslöcher 55 verläuft vollständig durch das Schaumteil 5 hindurch, so dass Luft durch das Durchgangsloch 55 hindurch strömen kann. Die Durchgangslöcher 55 verlaufen weitgehend senkrecht zur Oberfläche des Mittelbereichs 6.

Einige der Komfortröhren 50 weisen jeweils ein Sackloch 60 auf. Die Sacklöcher 60 sind vorliegend kreiszylinderförmig ausgebildet und liegen vorzugsweise zentrisch in der zugehörigen Komfortröhre 50. Von einer kreiszylindrischen Form abweichende Querschnitte der Sacklöcher 60, beispielsweise Polygonquerschnitte oder elliptische Querschnitte, sind ebenfalls möglich. Jedes der Sacklöcher 60 verläuft von einer Oberfläche des Schaumteils 5 startend in das Schaumteils 5 hinein, ohne vollständig durch das Schaumteil 5 hindurch zu laufen. Die Oberfläche kann die dem Sitzinsassen zugewandte Oberfläche des Schaumteils 5 sein, die auch als A-Seite bezeichnet wird. Die Oberfläche kann aber auch die dem Sitzinsassen abgewandte Unterseite des Schaumteils 5 sein, die auch als B-Seite bezeichnet wird. Jedes der Sacklöcher 60 ist somit nur einseitig offen, so dass keine Luft durch das Sackloch 60 hindurch strömen kann. Die Sacklöcher 60 verlaufen weitgehend senkrecht zur Oberfläche des Mittelbereichs 6.

Die Tiefe eines Sacklochs 60 in einer Komfortröhre 50 beeinflusst die Nachgiebigkeit dieser Komfortröhre 50. Die Tiefe eines Sacklochs 60 in einer Komfortröhre 50 kann geringer, gleich oder größer als die Höhe der Komfortröhre 50 sein.

Mittels der Tiefe der Sacklöcher 60 und / oder einer Kombination von Sacklöchern 60 und Durchgangslöchern 55 innerhalb eines Schaumteils 5 kann der Sitzkomfort und das Sitzklima gezielt beeinflusst werden.

Die Durchgangslöcher 55 ermöglichen einen effektiven Luft- und Feuchtigkeitsaustausch durch das Schaumteil 5 hindurch, und zwar vorteilhafterweise auch ohne aktive Belüftungsmittel wie Ventilatoren. Es handelt sich also um ein rein passives Klimasystem.

Zwischen den beiden Schaumlagen 11 und 21 befindet sich ein als Vlies 225 ausgebildetes Netzwerk, das eine Grenze zwischen den beiden Schaumlagen 11 und 21 darstellt. Die beiden Schaumlagen 11 und 21 sind jeweils stoffschlüssig und/oder formschlüssig mit dem Vlies 225 verbunden.

Das Vlies 225 ist vorzugsweise senkrecht zu den Durchgangslöchern 55 und den Sacklöchern 60 ausgerichtet. Vorliegend ist das Vlies 225 flächig und ohne Löcher ausgebildet, so dass das Vlies 225 durch die Löcher 55 hindurch läuft. Das Vlies 225 kann jedoch auch im Bereich der Löcher 55 gelocht ausgebildet sein.

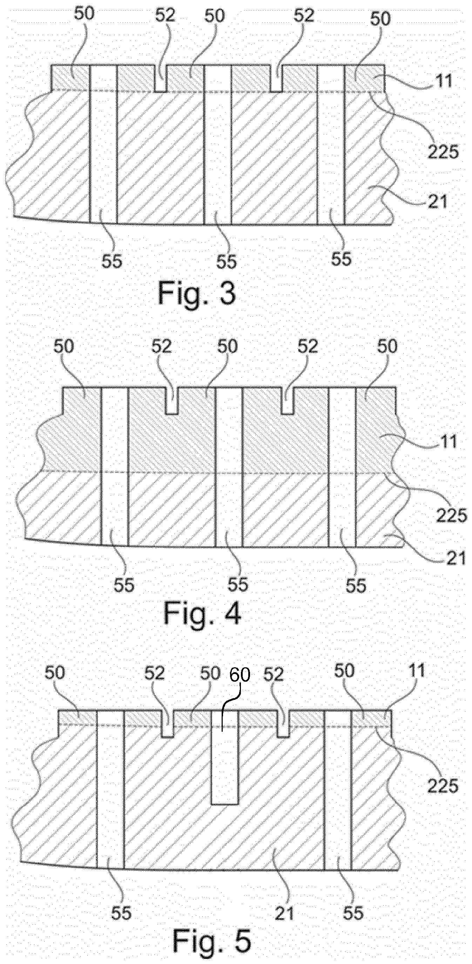

Figur 3 zeigt einen Schnitt durch das Schaumteil 5. Das Vlies 225 schließt unmittelbar an die Vertiefungen 52 zwischen den einzelnen Komfortröhren 50 an, so dass ausschließlich die Komfortröhren 50 die erste Schaumlage 11 bilden. Beim Einsitzen des Insassen werden zunächst im Wesentlichen die Komfortröhren 50 komprimiert. Im weiteren Verlauf des Einsitzens wird auch die zweite Schaumlage 21 deutlich komprimiert. Dadurch wird ein zweistufiges Einsitzverhalten mit steigender Polsterhärte erreicht. Der Schnitt in Figur 3 zeigt ausschließlich Durchgangslöchern 55. Es sind jedoch in anderen Komfortröhren 50 des Schaumteils 5 auch Sacklöcher 60 vorgesehen. Die Verteilung der Komfortröhren 50, die Sacklöcher 60 aufweisen, über den Mittelbereich 6 ist in vielfältiger Weise möglich. Die Tiefe eines Sacklochs 60 kann der Tiefe der die Komfortröhre 50 umgebenden Vertiefungen 52 und somit der Höhe der Komfortröhren 50 entsprechen. Ein Boden des Sacklochs 60 fällt dann mit dem Vlies 225 zusammen. Die Tiefe der Sacklöcher 60 kann jedoch auf kleiner oder größer sein. In letzterem Fall kann das Vlies 225 entsprechend gelocht sein.

In Figur 4 ist eine erste Abwandlung des ersten Ausführungsbeispiels dargestellt. Das Vlies 225 ist im Vergleich zum ersten Ausführungsbeispiel tiefer angeordnet, so dass die Trennebene zwischen den beiden Schaumlagen 11 und 21 tiefer liegt, das heißt weiter vom Insassen weg liegt. Während des Einsitzens des Insassen werden zunächst im Wesentlichen die Komfortröhren 50 komprimiert. Im weiteren Verlauf des Einsitzens wird im Wesentlichen die unterhalb der Komfortröhren 50 angeordnete Schicht der ersten Schaumlage 11 komprimiert, bis letztlich auch die zweite Schaumlage 21 deutlich komprimiert wird. Dadurch wird ein dreistufiges Einsitzverhalten mit steigender Polsterhärte erreicht. Der Schnitt in Figur 4 zeigt ausschließlich Durchgangslöcher 55. Es können jedoch in anderen Komfortröhren 50 des Schaumteils 5 auch Sacklöcher 60 vorgesehen sein. Die Verteilung der Komfortröhren 50, die Sacklöcher 60 aufweisen, über den Mittelbereich 6 ist in vielfältiger Weise möglich.

In Figur 5 ist eine zweite Abwandlung des ersten Ausführungsbeispiels dargestellt. Das Vlies 225 ist im Vergleich zum ersten Ausführungsbeispiel höher angeordnet, so dass die Trennung zwischen den beiden Schaumlagen 11 und 21 innerhalb der Komfortröhren 50 liegt, das heißt näher zum Insassen liegt. Beim Einsitzen des Insassen werden zunächst im Wesentlichen die oberen Bereiche der Komfortröhren 50, die zu der ersten Schaumlage 11 gehören, komprimiert. Im weiteren Verlauf des Einsitzens werden auch die unteren Bereiche der Komfortröhren 50, die zu der zweiten Schaumlage 21 gehören, deutlicher komprimiert und letztlich auch die unterhalb der Komfortröhren 50 gelegenen Bereiche der zweiten Schaumlage 21. Dadurch wird ein dreistufiges Einsitzverhalten mit steigender Polsterhärte erreicht. Der Schnitt in Figur 5 zeigt eine Komfortröhre 50 mit einem Sackloch 60, umgeben von zwei Komfortröhren 50 mit jeweils einem Durchgangsloch 55. Die Verteilung der Komfortröhren 50 mit Sacklöchern 60 über den Mittelbereich 6 ist in vielfältiger Weise möglich.

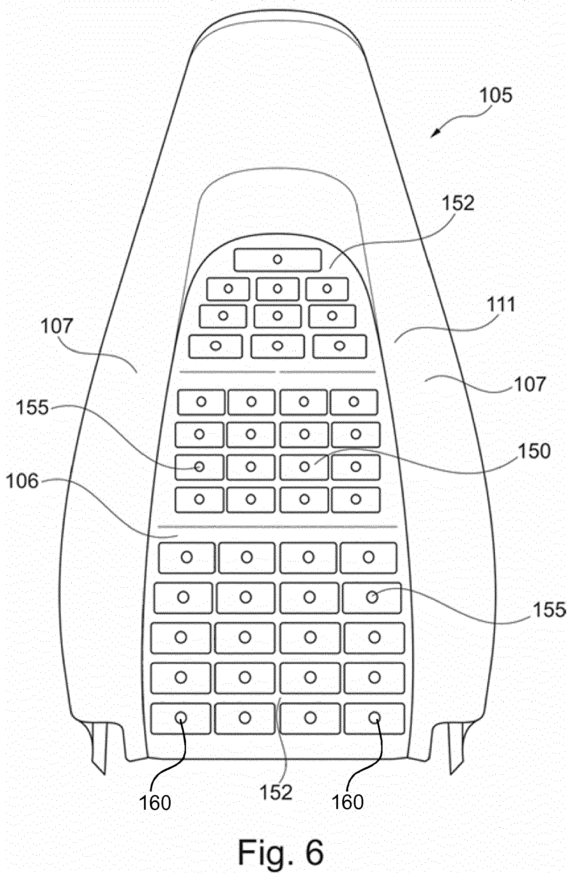

Ein in Fig. 6 dargestelltes, zweites Ausführungsbeispiel ist als Schaumteil 105 für eine Sitzlehne ausgeführt. Das Schaumteil 105 umfasst einen Mittelbereich 106 und zwei Seitenwangen 107. Das Schaumteil 5 des ersten Ausführungsbeispiels und das Schaumteil 105 schließen in Einbau- und Nutzlage einen Winkel von beispielsweise annähernd etwa 90 Grad ein. Eine erste Schaumlage 111 des Schaumteils 105 ist im Fahrzeug annähernd vertikal und in Fahrtrichtung nach vorne orientiert, so dass der Benutzer mit dem Rücken, gegebenenfalls unter Zwischenlage weiterer Polsterbestandteile, wie insbesondere eines Stoff- oder Lederbezuges, in Teilbereichen mit der ersten Schaumlage 111 in Kontakt ist.

In Einbaulage hinter der ersten Schaumlage 111 ist eine in der Figur 6 nicht sichtbare zweite Schaumlage angeordnet, insbesondere ebenfalls annähernd vertikal ausgerichtet und insbesondere einteilig mit der ersten Schaumlage 111 verbunden. Die zweite Schaumlage besteht vorzugsweise aus Hartschaum. Die erste Schaumlage 111 und die zweite Schaumlage sind in einem Werkzeug geschäumt und weisen zueinander unterschiedliche Härten und Dichten auf.

Die erste Schaumlage 111 weist zudem mehrere Komfortröhren 150 auf, welche den Komfort beim ersten Einsitzen und auf kurzen Fahrstrecken erhöhen. Die untere, härtere zweite Schaumlage stärkt hingegen den Langzeitkomfort.

Zwischen benachbarten Komfortröhren 150 liegen Vertiefungen 152, deren Tiefe der Höhe der jeweiligen Komfortröhren 150 über einer Grundfläche der ersten Schaumlage 111 entspricht.

Für einen guten Klimakomfort ist in einigen der Komfortröhren 150 ein Durchgangsloch 155 vorgesehen, das sich vollständig durch das Schaumteil 105 hindurch erstreckt. Die übrigen Komfortröhren 150 weisen jeweils genau ein Sackloch 160 auf. Die Verteilung der Komfortröhren 150 mit Sacklöcher 160 über den Mittelbereich 106 ist in vielfältiger Weise möglich.

Die erste Schaumlage 111 und die zweite Schaumlage sind vorzugsweise im MDI-(Diphenylmethandiisocyanat-) oder TDI- (Toluylendiisocyanat-) Schäumverfahren hergestellt. Die Schaumhärten liegen in an sich bekannten, typischen Bereichen.

In einer Abwandlung des zweiten Ausführungsbeispiels umfasst das Schaumteil 105 eine erste Schaumlage 111, jedoch keine weitere, insbesondere keine zweite Schaumlage. Dieser Aufbau wird vorzugsweise dann gewählt, wenn eine sehr geringe Schaumdicke des Schaumteils 105 erreicht werden soll oder ein einfacher Werkzeugaufbau realisiert werden soll.

Die Herstellung der erfindungsgemäßen Schaumteile 5 und 105 erfolgt in einem Werkzeug 500. Das Werkzeug 500 umfasst ein schüsselartiges Unterteil 510, einen relativ zum Unterteil 510 schwenkbaren Rahmen 520, der ein Vlies 225 als Zwischeneinleger aufspannt, und einen relativ zum Rahmen 520 verschwenkbares deckelartiges Oberteil 530. Die Werkzeugkonturen zur Herstellung der Komfortröhren 50 und 150 sind im Unterteil 510 vorgesehen, so dass das Schaumteil 5 gegenüber seiner Einbaulage im Fahrzeug kopfüber hergestellt wird.

In einem ersten Schäumvorgang wird in das Unterteil 510 das Material für die erste Schaumlage 11, 111 eingefüllt. Anschließend wird der Rahmen 520 mitsamt dem aufgespannten Vlies 225 auf das Unterteil 510 geschwenkt, so dass das Vlies 225 auf der Oberfläche der zweiten Schaumlage 21, 221 aufliegt. In einem zweiten Schäumvorgang wird das Material für die zweiten Schaumlage 21 in den Raum zwischen dem Rahmen 520 und dem Oberteil 530 eingebracht und das Oberteil 530 anschließend geschlossen.

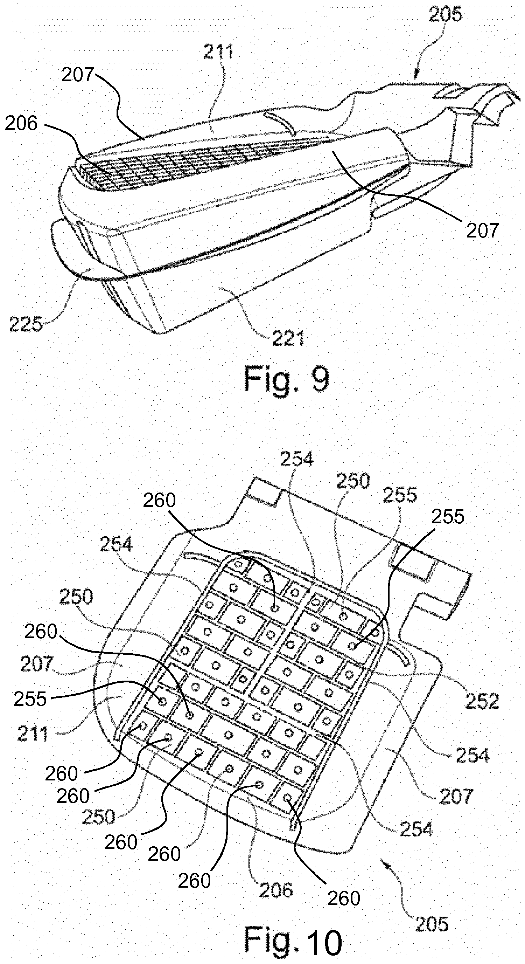

Ein in den Figuren 9 und 10 dargestelltes drittes Ausführungsbeispiel entspricht weitgehend dem ersten Ausführungsbeispiel, soweit es anschließend nicht abweichend beschrieben ist. Gleichwirkende Bauteile und Konturen haben gegenüber dem ersten Ausführungsbeispiel um den Wert 200 höhere Bezugszeichen. Ein Herstellverfahren und ein Werkzeug für das dritte Ausführungsbeispiel entsprechen ebenfalls jeweils weitgehend dem zuvor beschriebenen Herstellverfahren und Werkzeug.

Das dritte Ausführungsbeispiel ist ein Schaumteil 205 für ein Sitzkissen des Fahrzeugsitzes. Das Schaumteil 205 umfasst einen Mittelbereich 206 und zwei Seitenwangen 207.

Eine in Einbaulage des Fahrzeugsitzes annähernd horizontal angeordnete erste Schaumlage 211 ist im Falle der Benutzung des Fahrzeugsitzes dem Benutzer zugewandt. Die erste Schaumlage 211 besteht vorzugsweise aus Weichschaum.

In Einbaulage unterhalb der ersten Schaumlage 211 ist eine zweite Schaumlage 221 angeordnet, insbesondere ebenfalls annähernd horizontal ausgerichtet und einteilig mit der ersten Schaumlage 211 verbunden. Die zweite Schaumlage 221 besteht aus einem gegenüber dem Schaummaterial der ersten Schaumlage 211 festeren Schaummaterial, vorzugsweise aus Hartschaum.

Die beiden Schaumlagen 211 und 221 sind in einem Werkzeug geschäumt und weisen zueinander unterschiedliche Härten und Dichten auf.

Die erste Schaumlage 211 weist zudem mehrere, vorliegend dreiundvierzig Komfortröhren 250 auf, welche einen weitgehend rechteckförmigen Querschnitt haben. Einzelne dieser Komfortröhren 250 haben einen annähernd quadratischen Querschnitt. Zwischen benachbarten Komfortröhren 250 liegen Vertiefungen 252, deren Tiefe der Höhe der jeweiligen Komfortröhren 250 über einer Grundfläche der ersten Schaumlage 211 entspricht.

Die Komfortröhren 250 sind in drei Feldern von unmittelbar benachbarten Komfortröhren 250 aufgeteilt. Die Grenzen der Felder sind durch Polsterbefestigungskanäle 254 gebildet. Die Polsterbefestigungskanäle 254 bieten mehrere Durchgänge für an einem Sitzbezug befestigte erste Befestigungsmittel und mit diesen ersten Befestigungsmitteln zusammenwirkende und im Schaumteil 205 eingebrachte zweite Befestigungsmittel. Die an sich bekannten Befestigungsmittel, wie beispielsweise Drähte und Haken, sind in den Figuren nicht dargestellt.

In einem unter den Oberschenkeln eines Insassen positionierten vorderen Feld von Komfortröhren 250, d.h. im vorderen Bereich des Mittelbereiches 206 des Schaumteils 205 sind vorliegend siebzehn Komfortröhren 250 über die gesamte Breite des Mittelbereiches 206 verteilt. In zwei weiteren, jeweils in einem Bereich unter den Sitzbeinhöckern des Insassen positionierten hinteren Feldern von Komfortröhren 250, sind vorliegend jeweils dreizehn Komfortröhren 250 verteilt. In Querrichtung liegt jedes der beiden Felder jeweils zwischen einem Polsterbefestigungskanal 254 in der Sitzmitte und jeweils einem an eine der beiden Seitenwangen 207 angrenzenden Polsterbefestigungskanal 254. Die Verteilung und die Gestalt der Komfortröhren 250 in den beiden Feldern ist spiegelsymmetrisch zueinander.

Die Komfortröhren 250 sind einstückig mit der ersten Schaumlage 211 verbunden und bilden die dem Sitzinsassen am nächsten zugewandten Abschnitte des Mittelbereichs 206 des Schaumteils 205. Die Komfortröhren 250 sind im Wesentlichen senkrecht zur Sitzfläche angeordnet. Die Querschnitte der Komfortröhren 250 sind vorliegend rechteckig mit abgerundeten Kanten, können jedoch auch jede andere geometrische Form aufweisen.

Für einen guten Klimakomfort ist in einigen der Komfortröhren 250 jeweils ein Durchgangsloch 255 vorgesehen, das sich vollständig durch das Schaumteil 205 hindurch erstreckt. Andere der Komfortröhren 250 weisen jeweils genau ein Sackloch 260 auf. Die Verteilung der Komfortröhren 250, die Sacklöcher 260 aufweisen, über den Mittelbereich 206 ist in vielfältiger Weise möglich. Einzelne, vorliegend benachbart zu den Seitenwangen 207 angeordnete Komfortröhren 250, sind aus Vollmaterial gebildet und weisen somit weder ein Durchgangsloch 255 noch ein Sackloch 260 auf. Vorliegend sind in einer in Fahrtrichtung betrachtet vorderen Reihe von Komfortröhren 250 sämtliche Komfortröhren 250 mit jeweils einem Sackloch 260 versehen. In einer unmittelbar benachbarten zweiten Reihe von Komfortröhren 250 ist genau eine Komfortröhre 250 mit einem Sackloch 260 versehen, während die anderen Komfortröhren 250 dieser Reihe Durchgangslöcher 255 aufweisen. Die Verteilung der Komfortröhren 250 mit Sacklöchern 260 über den Mittelbereich 206 ist somit vorliegend unsymmetrisch ausgebildet.

Zwischen den beiden Schaumlagen 211 und 221 befindet sich ein als Vlies 225 ausgebildetes Netzwerk, das eine Grenze zwischen den beiden Schaumlagen 211 und 221 darstellt. Die beiden Schaumlagen 211 und 221 sind jeweils stoffschlüssig und/oder formschlüssig mit dem Vlies 225 verbunden.

Das Vlies 225 ist vorzugsweise senkrecht zu den Löchern 255 ausgerichtet. Vorliegend ist das Vlies 225 flächig ohne Löcher ausgebildet, so dass das Vlies 225 durch die Löcher 255 hindurch läuft. Das Vlies 225 kann jedoch auch im Bereich der Löcher 255 gelocht ausgebildet sein.

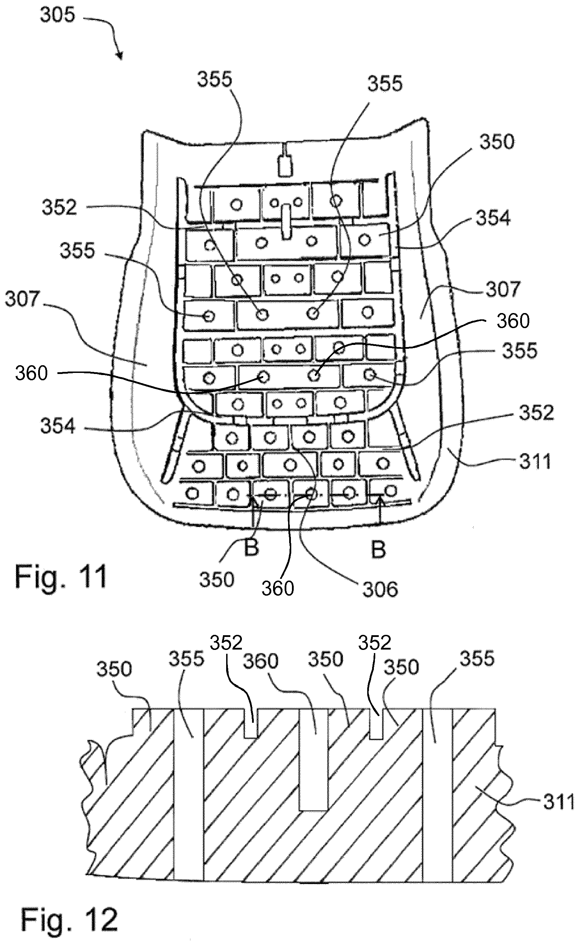

Ein in Figur 11 dargestelltes viertes Ausführungsbeispiel entspricht weitgehend dem ersten Ausführungsbeispiel, soweit es anschließend nicht abweichend beschrieben ist. Gleichwirkende Bauteile und Konturen haben gegenüber dem ersten Ausführungsbeispiel um den Wert 300 höhere Bezugszeichen. Ein Herstellverfahren und ein Werkzeug für das vierte Ausführungsbeispiel entsprechen ebenfalls jeweils weitgehend dem zuvor beschriebenen Herstellverfahren und Werkzeug.

Das vierte Ausführungsbeispiel ist ein Schaumteil 305 für ein Sitzkissen des Fahrzeugsitzes. Das Schaumteil 305 umfasst einen Mittelbereich 306 und zwei Seitenwangen 307.

Im Gegensatz zu den ersten Ausführungsbeispielen ist das Schaumteil 305 aus nur genau einem Schaumwerkstoff geschäumt, so dass es nur genau eine Schaumlage, nämlich eine erste Schaumlage 311 aufweist.

Das Schaumteil 305 weist mehrere Komfortröhren 350 auf, welche einen weitgehend rechteckförmigen Querschnitt haben. Einzelne dieser Komfortröhren 350 haben einen annähernd quadratischen Querschnitt. Zwischen benachbarten Komfortröhren 350 liegen Vertiefungen 352 mit unterschiedlichen Tiefen.

Die Komfortröhren 350 sind in zwei Felder von unmittelbar benachbarten Komfortröhren 350 aufgeteilt. Die Grenzen der Felder sind weitgehend durch Polsterbefestigungskanäle 354 gebildet. Die Polsterbefestigungskanäle 354 bieten mehrere Durchgänge für an einem Sitzbezug befestigte erste Befestigungsmittel und mit diesen ersten Befestigungsmitteln zusammenwirkende und im Schaumteil 305 eingebrachte zweite Befestigungsmittel. Die an sich bekannten Befestigungsmittel, wie beispielsweise Drähte und Haken, sind in Figur 11 nicht dargestellt.

Die Komfortröhren 350 sind einstückig mit der ersten Schaumlage 311 verbunden und bilden die dem Sitzinsassen am nächsten zugewandten Abschnitte des Mittelbereichs 306 des Schaumteils 305. Die Komfortröhren 350 sind im Wesentlichen senkrecht zur Sitzfläche angeordnet. Die Querschnitte der Komfortröhren 350 sind vorliegend rechteckig mit abgerundeten Kanten, können jedoch auch jede andere geometrische Form aufweisen.

Für einen guten Klimakomfort sind in einigen der Komfortröhren 350 jeweils ein Durchgangsloch 355 oder zwei Durchgangslöcher 355 vorgesehen. Die Durchgangslöcher 355 sind vorliegend kreiszylinderförmig ausgebildet und liegen vorzugsweise zentrisch in der zugehörigen Komfortröhre 350. Von einer kreiszylindrischen Form abweichende Querschnitte der Durchgangslöcher 355, beispielsweise Polygonquerschnitte oder elliptische Querschnitte, sind ebenfalls möglich. In der Mitte des Mittelbereichs 306 sind Komfortröhren 350 mit zwei versetzt zueinander positionierten, parallel verlaufenden Durchgangslöchern 355 vorgesehen. Jedes der Durchgangslöcher 355 verläuft vollständig durch das Schaumteil 305 hindurch, so dass Luft durch das Durchgangsloch 355 hindurch strömen kann. Die Durchgangslöcher 355 verlaufen weitgehend senkrecht zur Oberfläche des Mittelbereichs 306.

Einige der Komfortröhren 350 weisen jeweils ein Sackloch 360 oder zwei Sacklöcher 360 auf. Einzelne Komfortröhren 350 können ein Durchgangsloch 355 und ein Sackloch 360 aufweisen. Die Sacklöcher 360 sind vorliegend kreiszylinderförmig ausgebildet und liegen vorzugsweise zentrisch in der zugehörigen Komfortröhre 350. Von einer kreiszylindrischen Form abweichende Querschnitte der Sacklöcher 360, beispielsweise Polygonquerschnitte oder elliptische Querschnitte, sind ebenfalls möglich. Jedes der Sacklöcher 360 verläuft von einer Oberfläche des Schaumteils 305 startend in das Schaumteils 305 hinein, ohne vollständig durch das Schaumteil 305 hindurch zu verlaufen. Die Oberfläche kann die dem Sitzinsassen zugewandte Oberfläche des Schaumteils 305 sein, die auch als A-Seite bezeichnet wird. Die Oberfläche kann aber auch die dem Sitzinsassen abgewandte Unterseite des Schaumteils 305 sein, die auch als B-Seite bezeichnet wird. Jedes der Sacklöcher 360 ist somit nur einseitig offen, so dass keine Luft durch das Sackloch 360 hindurch strömen kann. Die Sacklöcher 360 verlaufen weitgehend senkrecht zur Oberfläche des Mittelbereichs 306.

Die Tiefe eines Sacklochs 360 in einer Komfortröhre 350 beeinflusst die Nachgiebigkeit dieser Komfortröhre 350. Die Tiefe eines Sacklochs 360 in einer Komfortröhre 350 kann geringer, gleich oder größer als die Höhe der Komfortröhre 350 sein. Einzelne, vorliegend benachbart zu den Seitenwangen 307 angeordnete Komfortröhren 350 sind aus Vollmaterial gebildet und weisen somit weder ein Durchgangsloch 355 noch ein Sackloch 360 auf.

Mittels der Tiefe der Sacklöcher 360 und / oder einer Kombination von Sacklöchern 360 und Durchgangslöchern 355 innerhalb eines Schaumteils 305 kann der Sitzkomfort und das Sitzklima gezielt beeinflusst werden.

In Abwandlung der ersten bis dritten Ausführungsbeispiele bestehen die Seitenwangen 7, 107, 207 aus einem dritten Schaummaterial, dass gegenüber dem Schaummaterial der zweiten Schaumlage 21, 221 fester und/oder härter ist. Die Trennebene zwischen der ersten Schaumlage 11, 111, 211 und der zweiten Schaumlage 21, 221 verläuft dann nicht durch die Seitenwangen 7, 107, 207. In Abwandlung des vierten Ausführungsbeispiels bestehen die Seitenwangen 307 aus einem zweiten Schaummaterial.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein. Es lassen sich somit beispielsweise für das Sitzkissen als mögliche Varianten ein horizontaler Zweizonenschaum, ein horizontaler Zweizonenschaum mit Klimafunktion, ein horizontaler Zweizonenschaum mit Komfortröhren und ein horizontaler Zweizonenschaum mit Komfortröhren und Klimafunktion bilden

### Bezugszeichenliste

- 5, 105, 205, 305: Schaumteil
- 6, 106, 206, 306: Mittelbereich
- 7, 107, 207, 307: Seitenwange
- 11, 111, 211, 311: erste Schaumlage
- 21, 221: zweite Schaumlage
- 50, 150, 250, 350: Komfortröhre
- 52, 152, 252, 352: Vertiefung
- 55, 155, 255, 355: Durchgangsloch
- 225: Vlies
- 254, 354: Polsterbefestigungskanal
- 60, 160, 260, 360: Sackloch
- 500: Werkzeug
- 510: Unterteil
- 520: Rahmen
- 530: Oberteil

## Patentansprüche

1. Schaumteil (5, 105, 205, 305) für einen Fahrzeugsitz, mit mehreren einem Insassen zugewandten Komfortröhren (50, 150, 250, 350), wobei mehrere der Komfortröhren (50, 150, 250, 350) jeweils ein Loch (55, 155, 255, 355, 60, 160, 260, 360) oder mehrere Löcher (55, 155, 255, 355, 60, 160, 260, 360) aufweisen, wobei mindestens eines der Löcher (55, 155, 255, 355, 60, 160, 260, 360) als Sackloch (60, 160, 260, 360) ausgebildet ist, wobei das Sackloch (60, 160, 260, 360) von einer dem Insassen zugewandten Oberfläche des Schaumteils (5, 105, 205, 305) ausgeht,
**dadurch gekennzeichnet, dass**
die Komfortröhren (50, 150, 250, 350) erhöhte Schaumteilbereiche sind, und zwischen benachbarten Komfortröhren (50, 150, 250, 350) Vertiefungen (52, 152, 252, 352) liegen.

2. Schaumteil (5, 105, 205, 305) nach Anspruch 1, **dadurch gekennzeichnet, dass** die Vertiefungen (52, 152, 252, 352) zwischen 5 mm und 50 mm, insbesondere zwischen 10 mm und 25 mm tief sind.

3. Schaumteil (5, 105, 205, 305) nach einem der Ansprüche 1 bis 2, **dadurch gekennzeichnet, dass** mindestens eine Komfortröhre (50, 150, 250, 350) genau ein Sackloch (60, 160, 260, 360) aufweist.

4. Schaumteil (5, 105, 205, 305) nach einem der Ansprüche 1 bis 3, **dadurch gekennzeichnet, dass** mindestens eine Komfortröhre (50, 150, 250, 350) mehrere Sacklöcher (60, 160, 260, 360) aufweist.

5. Schaumteil (5, 105, 205, 305) nach einem der Ansprüche 1 bis 4, **dadurch gekennzeichnet, dass** mindestens eine Komfortröhre (50, 150, 250, 350) ein Sackloch (60, 160, 260, 360) und ein Durchgangsloch (55, 155, 255, 355) aufweist.

6. Schaumteil (5, 105, 205, 305) nach einem der Ansprüche 1 bis 5, **dadurch gekennzeichnet, dass** mindestens ein Sackloch (60, 160, 260, 360) von einer dem Insassen zugewandten Oberfläche des Schaumteils (5, 105, 205, 305) ausgehend, in einer zu der Oberfläche annähernd senkrechten Richtung in das Schaumteil (5, 105, 205, 305) hinein verläuft.

7. Schaumteil (5, 105, 205, 305) nach einem der Ansprüche 1 bis 6, **dadurch gekennzeichnet, dass** mindestens ein Sackloch (60, 160, 260, 360) von einer dem Insassen abgewandten Oberfläche des Schaumteils (5, 105, 205, 305) ausgehend, in einer Schließrichtung eines Werkzeugs zur Herstellung des Schaumteils (5, 105, 205, 305), in das Schaumteil (5, 105, 205, 305) hinein verläuft.

8. Schaumteil (5, 105, 205, 305) nach einem der Ansprüche 1 bis 7, **dadurch gekennzeichnet, dass** die Tiefe mindestens eines Sacklochs (60, 160, 260, 360) der Höhe der zugeordneten Komfortröhre (50, 150, 250, 350) entspricht.

9. Schaumteil (5, 105, 205, 305) nach einem der Ansprüche 1 bis 8, **dadurch gekennzeichnet, dass** die Tiefe mindestens eines Sacklochs (60, 160, 260, 360) geringer ist als die Höhe der zugeordneten Komfortröhre (50, 150, 250, 350).

10. Schaumteil (5, 105, 205, 305) nach einem der Ansprüche 1 bis 9, **dadurch gekennzeichnet, dass** die Tiefe mindestens eines Sacklochs (60, 160, 260, 360) größer ist als die Höhe der zugeordneten Komfortröhre (50, 150, 250, 350).

11. Schaumteil (5, 105, 205, 305) nach einem der Ansprüche 1 bis 10, **dadurch gekennzeichnet, dass** wenigstens zwei Sacklöcher (60,160, 260, 360) zueinander unterschiedliche Tiefen aufweisen.

12. Schaumteil (5, 105, 205, 305) nach einem der Ansprüche 1 bis 11, **dadurch gekennzeichnet, dass** mindestens ein Sackloch (60,160, 260, 360) 5 mm bis 100 mm tief, insbesondere 20 mm bis 80 mm tief ist.

13. Fahrzeugsitz mit einer Lehne und einem Sitzkissen, **dadurch gekennzeichnet, dass** die Lehne und / oder das Sitzkissen ein Schaumteil (5, 105, 205, 305) nach einem der Ansprüche 1 bis 12 umfasst.

14. Fahrzeugsitz nach Anspruch 13, **dadurch gekennzeichnet, dass** eine in Fahrrichtung vorderste Reihe von Komfortröhren (50, 250, 350) eines Schaumteils (5, 205, 305) des Sitzkissens mindestens ein Sackloch (60, 260, 360) aufweist.

## Claims

1. Foam part (5, 105, 205, 305) for a vehicle seat, comprising a plurality of comfort tubes (50, 150, 250, 350) facing an occupant, wherein a plurality of comfort tubes (50, 150, 250, 350) respectively comprise a hole (55, 155, 255, 355, 60, 160, 260, 360) or a plurality of holes (55, 155, 255, 355, 60, 160, 260, 360), wherein at least one of the holes (55, 155, 255, 355, 60, 160, 260, 360) is configured as a blind hole (60, 160, 260, 360), wherein the blind hole (60, 160, 260, 360) starts from a surface of the foam part (5, 105, 205, 305) facing the occupant,
**characterized in that**
the comfort tubes (50, 150, 250, 350) are raised foam part regions and recesses (52, 152, 252, 352) are located between adjacent comfort tubes (50, 150, 250, 350).

2. Foam part (5, 105, 205, 305) according to Claim 1, **characterized in that** the recesses (52, 152, 252, 352) are between 5 mm and 50 mm deep, in particular between 10 mm and 25 mm deep.

3. Foam part (5, 105, 205, 305) according to one of Claims 1 to 2, **characterized in that** at least one comfort tube (50, 150, 250, 350) has just one blind hole (60, 160, 260, 360).

4. Foam part (5, 105, 205, 305) according to one of Claims 1 to 3, **characterized in that** at least one comfort tube (50, 150, 250, 350) has a plurality of blind holes (60, 160, 260, 360).

5. Foam part (5, 105, 205, 305) according to one of Claims 1 to 4, **characterized in that** at least one comfort tube (50, 150, 250, 350) comprises a blind hole (60, 160, 260, 360) and a through-hole (55, 155, 255, 355).

6. Foam part (5, 105, 205, 305) according to one of Claims 1 to 5, **characterized in that** at least one blind hole (60, 160, 260, 360), starting from a surface of the foam part (5, 105, 205, 305) facing an occupant, extends into the foam part (5, 105, 205, 305) in a direction approximately perpendicular to the surface.

7. Foam part (5, 105, 205, 305) according to one of Claims 1 to 6, **characterized in that** at least one blind hole (60, 160, 260, 360), starting from a surface of the foam part (5, 105, 205, 305) remote from the occupant, extends into the foam part (5, 105, 205, 305) in a closing direction of a tool for producing the foam part (5, 105, 205, 305).

8. Foam part (5, 105, 205, 305) according to one of Claims 1 to 7, **characterized in that** the depth of at least one blind hole (60, 160, 260, 360) corresponds to the height of the associated comfort tube (50, 150, 250, 350).

9. Foam part (5, 105, 205, 305) according to one of Claims 1 to 8, **characterized in that** the depth of at least one blind hole (60, 160, 260, 360) is less than the height of the associated comfort tube (50, 150, 250, 350).

10. Foam part (5, 105, 205, 305) according to one of claims 1 to 9, **characterized in that** the depth of at least one blind hole (60, 160, 260, 360) is greater than the height of the associated comfort tube (50, 150, 250, 350).

11. Foam part (5, 105, 205, 305) according to one of Claims 1 to 10, **characterized in that** at least two blind holes (60, 160, 260, 360) have different depths relative to one another.

12. Foam part (5, 105, 205, 305) according to one of Claims 1 to 11, **characterized in that** at least one blind hole (60, 160, 260, 360) is 5 mm to 100 mm deep, in particular 20 mm to 80 mm deep.

13. Vehicle seat having a backrest and a seat cushion, **characterized in that** the backrest and/or the seat cushion comprises a foam part (5, 105, 205, 305) according to one of Claims 1 to 12.

14. Vehicle seat according to Claim 13, **characterized in that** a row of comfort tubes (50, 250, 350) of a foam part (5, 205, 305) of the seat cushion, furthest to the front in the direction of travel, has at least one blind hole (60, 260, 360).

## Revendications

1. Pièce en mousse (5, 105, 205, 305) pour un siège de véhicule, comprenant plusieurs protubérances de confort (50, 150, 250, 350) orientées vers un occupant, dans laquelle plusieurs desdites protubérances de confort (50, 150, 250, 350) comprennent chacune un trou (55, 155, 255, 355, 60, 160, 260, 360) ou une pluralité de trous (55, 155, 255, 355, 60, 160, 260, 360), et au moins l'un des trous (55, 155, 255, 355, 60, 160, 260, 360) étant conçu sous forme de trou borgne (60, 160, 260, 360), le trou borgne (60, 160, 260, 360) partant d'une surface de la pièce en mousse (5, 105, 205, 305) orientée vers l'occupant, **caractérisée en ce que**
les protubérances de confort (50, 150, 250, 350) sont des zones de pièce en mousse surélevées et des évidements (52, 152, 252, 352) sont situés entre les protubérances de confort adjacentes (50, 150, 250, 350).

2. Pièce en mousse (5, 105, 205, 305) selon la revendication 1, **caractérisée en ce que** les évidements (52, 152, 252, 352) ont une profondeur comprise entre 5 mm et 50 mm, en particulier entre 10 mm et 25 mm de profondeur.

3. Pièce en mousse (5, 105, 205, 305) selon l'une des revendications 1 à 2, **caractérisée en ce qu'**au moins une protubérance de confort (50, 150, 250, 350) ne comporte qu'un seul trou borgne (60, 160, 260, 360).

4. Pièce en mousse (5, 105, 205, 305) selon l'une des revendications 1 à 3, **caractérisée en ce qu'**au moins une protubérance de confort (50, 150, 250, 350) présente une pluralité de trous borgnes (60, 160, 260, 360).

5. Pièce en mousse (5, 105, 205, 305) selon l'une des revendications 1 à 4, **caractérisée en ce qu'**au moins une protubérance de confort (50, 150, 250, 350) comprend un trou borgne (60, 160, 260, 360) et un trou traversant (55, 155, 255, 355).

6. Pièce en mousse (5, 105, 205, 305) selon l'une des revendications 1 à 5, **caractérisée en ce qu'**au moins un trou borgne (60, 160, 260, 360), à partir d'une surface de la pièce en mousse (5, 105, 205, 305) orientée vers un occupant, s'étend dans la pièce en mousse (5, 105, 205, 305) dans une direction approximativement perpendiculaire à la surface.

7. Pièce en mousse (5, 105, 205, 305) selon l'une des revendications 1 à 6, **caractérisée en ce qu'**au moins un trou borgne (60, 160, 260, 360), partant d'une surface de la pièce en mousse (5, 105, 205, 305) éloignée de l'occupant, s'étend dans la pièce en mousse (5, 105, 205, 305) dans la direction de fermeture d'un outil destiné à produire la pièce en mousse (5, 105, 205, 305).

8. Pièce en mousse (5, 105, 205, 305) selon l'une des revendications 1 à 7, **caractérisée en ce que** la profondeur d'au moins un trou borgne (60, 160, 260, 360) correspond à la hauteur de la protubérance de confort associée (50, 150, 250, 350).

9. Pièce en mousse (5, 105, 205, 305) selon l'une des revendications 1 à 8, **caractérisée en ce que** la profondeur d'au moins un trou borgne (60, 160, 260, 360) est inférieure à la hauteur de la protubérance de confort associée (50, 150, 250, 350).

10. Pièce en mousse (5, 105, 205, 305) selon l'une des revendications 1 à 9, **caractérisée en ce que** la profondeur d'au moins un trou borgne (60, 160, 260, 360) est supérieure à la hauteur de la protubérance de confort associé (50, 150, 250, 350).

11. Pièce en mousse (5, 105, 205, 305) selon l'une des revendications 1 à 10, **caractérisée en ce qu'**au moins deux trous borgnes (60, 160, 260, 360) ont des profondeurs différentes l'un par rapport à l'autre.

12. Pièce en mousse (5, 105, 205, 305) selon l'une des revendications 1 à 11, **caractérisée en ce qu'**au moins un trou borgne (60, 160, 260, 360) a une profondeur de 5 mm à 100 mm, en particulier de 20 mm à 80 mm.

13. Siège de véhicule comportant un dossier et un coussin de siège, **caractérisé en ce que** le dossier et/ou le coussin de siège comprend une pièce en mousse (5, 105, 205, 305) selon l'une des revendications 1 à 12.

14. Siège de véhicule selon la revendication 13, **caractérisé en ce qu'**une rangée de protubérances de confort (50, 250, 350) d'une pièce en mousse (5, 205, 305) du coussin du siège, la plus éloignée vers l'avant dans la direction de déplacement, présente au moins un trou borgne (60, 260, 360).
